# EUROPEAN PATENT APPLICATION

(11) **EP 3 244 472 A1**
(43) Date of publication of application: **15.11.2017**
(21) Application number: 16168920.3
(22) Date of filing: 10.05.2016
(51) Int. Cl.: H01M 4/36, H01M 4/13, H01M 4/38, H01M 4/48, H01M 4/58, H01M 10/052, H01M 4/02

(54) **COMPOSITES COMPRISING HOLLOW MICROSPHERES OF A VANADIUM OXIDE FOR LITHIUM SULFUR CELLS**

(71) Applicant: BASF SE, 67056 Ludwigshafen am Rhein (DE); Karlsruher Institut für Technologie (KIT), 76131 Karlsruhe (DE)
(72) Inventor: SOMMER, Heino, 76344 Eggenstein-Leopoldshafen (DE); TER MAAT, Johan, 68163 Mannheim (DE); VOLKOV, Aleksei, 67065 Ludwigshafen (DE); SCHNEIDER, Holger, 85704 Tucson (US); JANEK, Juergen, 35392 Giessen (DE); BREZESINSKI, Torsten, 76149 Karlsruhe (DE); LODI-MARZANO, Fernanda, 76131 Karlsruhe (DE)
(74) Representative: BASF IP Association

(57) **Abstract**

The present invention relates to an electroactive composite for an electrochemical cell, especially a lithium-sulfur battery cell, comprising (A1) an electroactive sulfur-containing material (e.g. elemental sulfur), and
(A2) hollow microspheres of a vanadium oxide (e.g. V2O5). The present invention further relates to a cathode material for an electrochemical cell comprising said electroactive composite, to a cathode and an electrochemical cell comprising said cathode material and to a process for preparing said electroactive composite by filling/infiltrating the hollow microspheres of vanadium oxide with the electroactive sulfur-containing material.

## Description

The present invention relates to an electroactive composite for an electrochemical cell comprising
(A1) an electroactive sulfur-containing material, and
(A2) hollow microspheres of a vanadium oxide.

The present invention further relates to a cathode material for an electrochemical cell comprising said electroactive composite, to a cathode and an electrochemical cell comprising said cathode material and to a process for preparing said electroactive composite.

Secondary batteries, accumulators or rechargeable batteries are just some embodiments by which electrical energy can be stored after generation and used when required. Due to the significantly better power density, there has been a move in recent times away from the water-based secondary batteries to development of batteries in which the charge transport in the electrical cell is accomplished by lithium ions.

However, the energy density of conventional lithium ion batteries which have a carbon anode and a cathode based on metal oxides is limited. New horizons with regard to energy density have been opened up by lithium-sulfur cells. In lithium-sulfur cells, sulfur in the sulfur cathode is reduced via polysulfide ions to S²⁻, which is reoxidized when the cell is charged to form sulfur-sulfur bonds.

A problem, however, is the solubility of the polysulfides, for example Li₂S₄ and Li₂S₆, which are generally soluble in the solvent and can migrate to the anode. The consequences may include: loss of capacitance and deposition of electrically insulating material on the sulfur particles of the electrode. The migration of the polysulfide ions from the cathode to anode can ultimately lead to discharge of the affected cell and to cell death in the battery. This unwanted migration of polysulfide ions is also referred to as "shuttling", a term which is also used in the context of the present invention.

Carbon sulfur composites are important components of the cathodes of lithium sulfur cells contributing significantly to the overall performance of lithium sulfur cells in particular with respect to lowering the internal impedance by providing a conductive element. Depending on the porous carbon architecture and its surface modification, the carbon framework can increase the coulombic efficiency, lower the degree of capacity fading, and help limit self-discharge by physically trapping polysulfide ions within the cathode although these effects are usually limited to short-term cycling.

US 6,210,831 describes solid composite cathodes which comprise (a) sulfur-containing cathode material which, in its oxidized state, comprises a polysulfide moiety of the formula, -Sₘ-, wherein m is an integer from 3 to 10; and (b) a non-electroactive particulate material having a strong adsorption of soluble polysulfides.

US 8,173,302 describes an electrode material having carbon and sulfur, wherein the carbon is in the form of a porous matrix having nanoporosity and the sulfur is sorbed into the nanoporosity of the carbon matrix.

US 2013/0065127 describes sulfur cathodes for use in an electric current producing cells or rechargeable batteries. The sulfur cathode comprises an electroactive sulfur containing material, an electrically conductive filler and a non-electroactive component.

N. Jayaprakash et al., Angew. Chem. 123 (2011) 6026-6030 describe the synthesis of hollow carbon capsules, which are afterwards filled with sulfur in order to obtain a C@S composites, which are used in lithium-sulfur batteries.

Z.W. Seh et al., Nat. Commun. 4:1331 doi: 10.1038/ncomms2327 (2013) disclose particles, which show a sulfur-TiO₂ yolk-shell nanoarchitecture with internal void space and which can be used for long-cycle lithium sulfur batteries.

Z.W. Seh et al., Nat. Commun. 5:5017 doi: 10.1038/ncomms6017 (2014) describe core-shell particles comprising a core of Li₂S and a shell formed by crystalline TiS2, which is a two-dimensional layered transition metal disulfide.

A.M. Cao et al., Angew. Chem. 117 (2005) 4465-4469 describe the preparation of hollow microspheres of V₂O₅ and their application in lithium-ion-batteries.

A. Pan et al., Angew. Chem. 52 (2013) 2226-2230 disclose a template-free synthesis of hollow microspheres of VO₂ and their application in lithium-ion-batteries.

L. Chen et al., J. of Nanomat., Volume 2012, Article ID 491051 describe the synthesis of thermochromic W-doped VO₂ nanopowders.

The sulfur-containing electroactive composites or cathode materials described in the literature still have shortcomings with regard to one or more of the properties desired for such materials and the electrochemical cells produced therefrom. Desirable properties are, for example, high electrical conductivity of the cathode materials, maintenance of cathode capacity during lifetime, reduced self-discharge of the electrochemical cells during storage, an increase in the lifetime of the electrochemical cell, an improvement in the mechanical stability of the cathode or a reduced change in volume of the cathodes during a charge-discharge cycle. In general, the desired properties mentioned also make a crucial contribution to improving the economic viability of the electrochemical cell, which, as well as the aspect of the desired technical performance profile of an electrochemical cell, is of crucial significance to the user. A further aspect of the economic viability is the accessibility of the appropriate starting materials. Host materials for sulfur, which are only accessible by complicated template assisted syntheses, have to be substituted by easily accessible ones.

It was thus an object of the present invention to provide a beneficial sulfur-containing electroactive composite or the corresponding cathode material for a lithium-sulfur cell, which have advantages over one or more properties of known materials, more particularly a sulfur-containing electroactive composite and accordingly the cathode material which enable the construction of cathodes with an improved electrical conductivity, combined with high cathode capacity, high mechanical stability, long lifetime and high economic viability due to cost effective starting materials and simple processes.

This object is achieved by an electroactive composite for an electrochemical cell comprising
(A1) an electroactive sulfur-containing material, and
(A2) hollow microspheres of a vanadium oxide.

In the context with the present invention, the electrode where during discharging a net negative charge occurs is called the anode and the electrode where during discharging a net positive charge occurs is called the cathode.

An inventive electroactive composite for an electrochemical cell, also referred to hereinafter as electroactive composite (A), for short, comprises, as component (A1), an electroactive sulfur-containing material, also referred to hereinafter as electroactive material (A1) for short, and, as component (A2), hollow microspheres of a vanadium oxide, also referred to hereinafter as VOₓ particles (A2) for short.

Electroactive sulfur-containing materials are either covalent compounds like elemental sulfur, composites produced from elemental sulfur and at least one polymer or polymers comprising polysulfide bridges or ionic compounds like salts of sulfides or polysulfides.

Elemental sulfur is known as such.

Composites produced from elemental sulfur and at least one polymer, which find use as a constituent of electrode materials, are likewise known to those skilled in the art. Adv. Funct. Mater. 2003, 13, 487 - 492 describes, for example, a reaction product of sulfur and polyacrylonitrile, which results from elimination of hydrogen from polyacrylonitrile with simultaneous formation of hydrogen sulfide.

Polymers comprising divalent di- or polysulfide bridges, for example polyethylene tetrasulfide, are likewise known in principle to those skilled in the art. J. Electrochem. Soc., 1991, 138, 1896 - 1901 and US 5,162,175 describe the replacement of pure sulfur with polymers comprising disulfide bridges. Polyorganodisulfides are used therein as materials for solid redox polymerization electrodes in rechargeable cells, together with polymeric electrolytes.

Salts of sulfides or polysulfides are examples of ionic compounds comprising at least one Li-S-group like Li₂S, lithium polysulfides (Li₂S_{2 to 8}) or lithiated thiols (lithium thiolates).

A preferred electroactive sulfur-containing material (A1) is elemental sulfur.

In one embodiment of the present invention, the inventive electroactive composite (A) is characterized in that the electroactive sulfur-containing material (A1) is elemental sulfur.

Vanadium oxides are known as such. Examples of vanadium oxides are VO, V₂O₃, VO₂ and V₂O₅. Preferred vanadium oxides are VO₂ and V₂O₅. In a preferred embodiment the vanadium oxide is doped with tungsten. The amount of tungsten can be varied in a wide range. Preferably the vanadium oxide is doped with tungsten, wherein the atomic ratio of tungsten to vanadium is in the range from 0.001 to 0.20, more preferably in the range from 0.005 to 0.10, in particular in the range from 0.01 to 0.05.

In one embodiment of the present invention, the inventive electroactive composite (A) is characterized in that the vanadium oxide is selected from VO₂ and V₂O₅, and wherein the vanadium oxide is doped with tungsten, wherein the atomic ratio of tungsten to vanadium is in the range from 0.005 to 0.10.

Hollow microspheres of a vanadium oxide are known by the person skilled in the art. Preferred are hollow microspheres of a vanadium oxide, which are obtained by a template free method such as described by A. Pan et al. in Angew. Chem. 52 (2013) 2226-2230.

Preferably, the voids of the hollow microspheres of a vanadium oxide are filled at least partially with the electroactive sulfur-containing material. That means, that the electroactive composite comprises core-shell particles, wherein the core of said particles comprises the electroactive sulfur-containing material, and wherein the shell of said particles comprises the vanadium oxide.

In one embodiment of the present invention, the electroactive composite (A) is characterized in that the electroactive composite comprises core-shell particles, wherein the core of said particles comprises the electroactive sulfur-containing material, and wherein the shell of said particles comprises the vanadium oxide.

The size or average diameter of the hollow microspheres can be varied in a wide range. Preferred are hollow microspheres, which show an average diameter in the range from 0.01 µm to 100 µm, more preferably in the range from 0.1 µm to 10 µm, in particular in the range from 0.5 µm to 8 µm.

In one embodiment of the present invention, the electroactive composite (A) is characterized in that the average diameter of the hollow microspheres is in the range from 0.1 µm to 10 µm.

The hollow microspheres of a vanadium oxide can show a unimodal, a bimodal or a multimodal particle distribution.

The thickness of the shells of said hollow microspheres can be varied in a wide range. Preferred are hollow microspheres, wherein the thickness of the shells of said hollow microspheres is in the range from 0.001 µm to 40 µm, more preferably in the range from 0.01 µm to 5 µm, in particular in the range from 0.1 µm to 1 µm.

The shells of said hollow microspheres can be free of any pores or they are preferably porous, in particular having through pores, which allow the filling of the voids of the hollow microspheres with electroactive sulfur-containing material (A1).

The volume fraction of the pores of the shell based on the total volume of the shell, disregarding the embedded void volume inside the hollow microsphere, can be varied in a wide range. Preferably the volume fraction of the pores of the shells based on the total volume of the shells, disregarding the embedded void volume inside the hollow microspheres is in the range from 0 up to 0.5, more preferably in the range from 0.05 up to 0.35, in particular in the range from 0.15 up to 0.3.

The shells of said particles comprise the vanadium oxide. The shells might in addition to the vanadium oxide also comprise other compounds, such as Al₂O₃ or silica nano-particles or CNT.

The mass fraction of vanadium oxide in the shell of said hollow microsphere can be varied in a wide range. Preferably the mass fraction of vanadium oxide in the shell of said hollow microsphere is in the range from 0.8 up to 1, more preferably in the range from 0.9 up to 1, in particular in the range from 0.95 up to 1.

The mass fraction of all electroactive sulfur-containing material (A1), in particular elemental sulfur, and the mass fraction of hollow microspheres of a vanadium oxide (A2) can be varied in a wide range depending on the applied process of production and the used starting materials. The mass fraction of all electroactive sulfur-containing material (A1), in particular elemental sulfur, in the electroactive composite (A) is preferably in the range from 0.2 to 0.95, in particular in the range from 0.6 to 0.85. The mass fraction of hollow microspheres of a vanadium oxide (A2) in the electroactive composite (A) is preferably in the range from 0.05 to 0.8, in particular in the range from 0.15 to 0.4.

In one embodiment of the present invention, the inventive electroactive composite (A) is characterized in that the mass fraction of electroactive sulfur-containing material (A1) is in the range from 0.2 up to 0.95, more preferably in the range from 0.6 to 0.85.

In one embodiment of the present invention, the inventive electroactive composite (A) is characterized in that the mass fraction of hollow microspheres of a vanadium oxide (A2) is in the range from 0.05 to 0.8, more preferably in the range from 0.15 to 0.4

In one embodiment of the present invention, the inventive electroactive composite (A) is characterized in that the mass fraction of electroactive sulfur-containing material is in the range from 0.2 up to 0.95 and the mass fraction of hollow microspheres of a vanadium oxide is in the range from 0.05 up to 0.8.

The ratio of the mass fraction of all electroactive sulfur-containing material (A1) to the mass fraction of the hollow microspheres of a vanadium oxide (A2) can be varied in a wide range. Preferably the ratio of the mass fraction of all electroactive sulfur-containing material (A1) to the mass fraction of the hollow microspheres of a vanadium oxide (A2) is in the range from 0.2 to 20, preferably in the range from 1.5 to 6.

In one embodiment of the present invention, the inventive electroactive composite (A) is characterized in that the ratio of the mass fraction of all electroactive sulfur-containing materials (A1) to the mass fraction of the hollow microspheres of a vanadium oxide (A2) is in the range from 0.2 to 20, preferably in the range from 1.5 to 6.

The sum of the mass fraction of all electroactive sulfur-containing material (A1) and of the mass fraction of the hollow microspheres of a vanadium oxide (A2) based on the total mass of the electroactive composite (A) can be varied in a wide range depending on the amount of components in addition to components (A1) and (A2). Preferably the sum of the mass fraction of all electroactive sulfur-containing material (A1) and of the mass fraction of the hollow microspheres of a vanadium oxide (A2) based on the mass of the electroactive composite (A) is in the range from 0.5 to 1, preferably in the range from 0.8 to 1, in particular in the range from 0.9 to 1.

In one embodiment of the present invention, the inventive electroactive composite for an electrochemical cell is characterized in that the electroactive sulfur-containing material (A1) is elemental sulfur, and the vanadium oxide of the hollow microspheres of a vanadium oxide is selected from VO₂, V₂O₅, W-doped VO₂ and W-doped V₂O₅, wherein the atomic ratio of tungsten to vanadium is in the range from 0.005 to 0.10, wherein the ratio of the mass fraction of elemental sulfur to the mass fraction of hollow microspheres of a vanadium oxide (A2) is in the range from 1.5 to 6, and the sum of the mass fraction of elemental sulfur and of the mass fraction of hollow microspheres of a vanadium oxide (A2) is in the range from 0.90 to 1.

The invention further provides a process for preparing an electroactive composite for an electro-chemical cell comprising
(A1) an electroactive sulfur-containing material, and
(A2) hollow microspheres of a vanadium oxide,
as described above, comprising the process step of
(a) loading the electroactive sulfur-containing material (A1) into the hollow microspheres of a vanadium oxide (A2).

The description and preferred embodiments of the electroactive composite for an electrochemical cell (electroactive composite (A)) and its components, in particular the description of the electroactive sulfur-containing material (A1) as a first component and of the hollow microspheres of a vanadium oxide (A2) as a second component, in the inventive process correspond to the above description of these components for the electroactive composite (A) of the present invention.

In one embodiment of the present invention, the inventive process for preparing an electroactive composite (A) is characterized in that in process step (a) the electroactive sulfur-containing material (A1) is elemental sulfur.

Process step (a) can be executed in a wide temperature range. Preferably process step (a) comprises a heat treatment at a temperature in the range from 100 to 200°C, preferably in the range from 120 to 180°C, in particular in the range from 150 to 160°C.

In one embodiment of the present invention, the inventive process for preparing an electroactive composite (A) is characterized in that process step (a) comprises a heat treatment at a temperature in the range from 100 to 200°C, preferably in the range from 120 to 180°C, in particular in the range from 150 to 160°C.

As described above the hollow microspheres of a vanadium oxide (A2) can be used as a component for the preparation of an electroactive composite for an electrochemical cell comprising an electroactive sulfur-containing material.

The invention further provides the use of hollow microspheres of a vanadium oxide as a component for the preparation of an electroactive composite for an electrochemical cell comprising an electroactive sulfur containing material.

The description and preferred embodiments of the hollow microspheres of a vanadium oxide (A2) correspond to the above description of this component for the electroactive composite (A) of the present invention. Particularly preferred is the use of hollow microspheres of a vanadium oxide (A2), wherein the vanadium oxide is selected from VO₂, V₂O₅. W-doped VO₂ and W-doped V₂O₅, wherein the atomic ratio of tungsten to vanadium is in the range from 0.005 to 0.10, as a component for the preparation of an electroactive composite for an electrochemical cell comprising as a further component elemental sulfur.

The present invention further also provides a cathode material for an electrochemical cell comprising
(A) an electroactive composite as described above,
(B) optionally carbon in a polymorph comprising at least 60% sp²-hybridized carbon atoms, and
(C) optionally at least one polymer as a binder.

The inventive cathode material for an electrochemical cell comprises optionally in addition to the inventive electroactive composite (A), which has been described above, as an optional second component, carbon in a polymorph comprising at least 60% sp²-hybridized carbon atoms, also referred to hereinafter as carbon (B) for short, and as an optional third component (C) a polymer as a binder, also referred to hereinafter as binder (C) for short. Preferably the cathode material for an electrochemical cell comprises in addition to the inventive electroactive composite (A), which has been described above, as a second component, carbon in a polymorph comprising at least 60% sp²-hybridized carbon atoms, also referred to hereinafter as carbon (B) for short, and as an optional third component (C) a polymer as a binder, also referred to hereinafter as binder (C) for short. In particular the cathode material for an electrochemical cell comprises in addition to the inventive electroactive composite (A), which has been described above, as a second component, carbon in a polymorph comprising at least 60% sp²-hybridized carbon atoms, also referred to hereinafter as carbon (B) for short, and as a third component (C) a polymer as a binder, also referred to hereinafter as binder (C) for short.

The description and preferred embodiments of the electroactive composite (A) and its components correspond to the above description.

Carbon (B), which improves the electrical conductivity of the inventive cathode material, can be selected from graphite, carbon black, carbon nanotubes, graphene or mixtures of at least two of the aforementioned substances. Suitable carbons in a conductive polymorph are described in WO 2012/168851 page 4, line 30 to page 6, line 22.

In one embodiment of the present invention, the inventive cathode material for an electrochemical cell is characterized in that carbon (B) is selected from graphite, graphene, activated carbon and especially carbon black.

In one embodiment of the present invention, the inventive cathode material for an electrochemical cell comprises at least one polymer as a binder.

Binder (C) can be selected from a wide range of organic polymers. Suitable binders are described in WO 2012/168851 page 6, line 40 to page 7, line 30.

Particularly suitable binders for the inventive cathode material for an electrochemical cell are especially polyvinyl alcohol, poly(ethylene oxide), carboxymethyl cellulose (CMC) and halogenated (co)polymers, for example polyvinyl chloride or polyvinylidene chloride, especially fluorinated (co)polymers such as polyvinyl fluoride and especially polyvinylidene fluoride, lithiated Nafion and polytetrafluoroethylene.

In one embodiment of the present invention, the inventive cathode material for an electrochemical cell comprises in the range from 10 to 80% by weight, preferably 30 to 75% by weight, of sulfur, determined by elemental analysis, based on the total weight of the cathode material for an electrochemical cell.

In one embodiment of the present invention, the inventive cathode material for an electrochemical cell comprises in the range from 0.1 to 60% by weight of carbon in a conductive polymorph, preferably 0.2 to 30% by weight, more preferably 0.3 to 10% by weight, much more preferably 0.4 to 5% by weight, in particular 0.5 to 3% by weight based on the total weight of the cathode material for an electrochemical cell. This carbon can likewise be determined by elemental analysis, for example, in which case the evaluation of the elemental analysis has to take into account the fact that carbon also arrives in organic polymers representing binders, and possibly further sources.

In one embodiment of the present invention, the inventive cathode material for an electrochemical cell comprises in the range from 0.1 to 20% by weight of binder, preferably 0.5 to 10% by weight and more preferably 2 to 5% by weight, based on the total weight of the cathode material for an electrochemical cell.

Inventive electroactive composite (A) and inventive cathode material are particularly suitable as or for production of cathodes, especially for production of cathodes of lithium-containing batteries. The present invention provides for the use of inventive electroactive composites (A) or inventive cathode materials as or for production of cathodes for electrochemical cells.

The present invention further also provides a cathode which has been produced from or using a cathode material as described above. The originally assembled cathode comprises cathode material as described above. During discharging of the electrochemical cell, the cathode material continuously changes, in particular S-S-bonds are broken by reduction with two electrons under the formation of two -S⁻-groups.

The inventive cathode may have further constituents customary *per se,* for example a current collector, which may be configured in the form of a metal wire, metal grid, metal mesh, expanded metal, metal sheet, metal foil or carbon paper/cloth. Suitable metal foils are especially aluminum foils.

In one embodiment of the present invention, the inventive cathode has a thickness in the range from 25 to 200 µm, preferably from 30 to 100 µm, based on the thickness without current collector.

A further feature of inventive electroactive composites (A) or inventive cathode materials is that it is possible in accordance with the invention to produce battery cells which are preferably stable over at least 30 cycles, more preferably over at least 50 cycles, even more preferably over at least 100 cycles, especially over at least 200 cycles or over at least 500 cycles.

In one embodiment of the present invention, electroactive composite (A) or inventive cathode material is processed to cathodes, for example in the form of continuous belts which are processed by the battery manufacturer.

Inventive cathodes produced from electroactive composite (A) or inventive cathode material may have, for example, thicknesses in the range from 20 to 500 µm, preferably 40 to 200 µm. They may, for example, be in the form of rods, in the form of round, elliptical or square columns or in cuboidal form, or in the form of flat cathodes.

The present invention further provides an electrochemical cell comprising at least one inventive cathode as described above, which has been produced from or using at least one inventive electroactive composite (A) or at least one inventive cathode material as described above.

During the charging process of an inventive electrochemical cell the inventive cathode comprises usually a mixture of different electroactive sulfur-containing materials since more and more S-S-bonds are formed.

In one embodiment of the present invention, inventive electrochemical cells comprise, as well as inventive cathode, which comprises inventive electroactive composite (A) respectively inventive cathode material, at least one anode comprising at least one alkali metal like lithium, sodium or potassium. Preferably the anode of the inventive electrochemical cell comprises lithium.

The alkali metal of anode of the inventive electrochemical cell can be present in the form of a pure alkali metal phase, in form of an alloy together with other metals or metalloids, in form of an intercalation compound or in form of an ionic compound comprising at least one alkali metal and at least one transition metal.

The anode of the inventive electrochemical cell can be selected from anodes being based on various active materials. Suitable active materials are metallic lithium, carbon-containing materials such as graphite, graphene, charcoal, expanded graphite, in particular graphite, furthermore lithium titanate (Li4Ti₅O₁₂), anodes comprising In, TI, Sb, Sn or Si, in particular Sn or Si, for example tin oxide (SnO₂) or nanocrystalline silicon, and anodes comprising metallic lithium.

In one embodiment of the present invention the electrochemical cell is characterized in that the anode of the inventive electrochemical cell is selected from graphite anodes, lithium titanate anodes, anodes comprising In, TI, Sb, Sn or Si, and anodes comprising metallic lithium.

In one embodiment of the present invention, the inventive electrochemical cell is characterized in that the alkali metal of the anode is lithium.

The anode of the inventive electrochemical cell can further comprise a current collector. Suitable current collectors are, e.g., metal wires, metal grids, metal gauze and preferably metal foils such as copper foils.

The anode of the inventive electrochemical cell can further comprise a binder. Suitable binders can be selected from organic (co)polymers. Suitable organic (co)polymers may be halogenated or halogen-free. Examples are polyethylene oxide (PEO), cellulose, carboxymethyl cellulose, polyvinyl alcohol, polyethylene, polypropylene, polytetrafluoroethylene, polyacrylonitrile-methyl methacrylate, styrene-butadiene copolymers, tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers, ethylene-chlorofluoroethylene copolymers, ethylene-acrylic acid copolymers, optionally at least partially neutralized with alkali metal salt or ammonia, ethylene-methacrylic acid copolymers, optionally at least partially neutralized with alkali metal salt or ammonia, ethylene-(meth)acrylic ester copolymers, polysulfones, polyimides and polyisobutene.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

The average molecular weight M_{w} of binder may be selected within wide limits, suitable examples being 20,000 g/mol to 1,000,000 g/mol.

In one embodiment of the present invention, the anode of the inventive electrochemical cell can have a thickness in the range of from 15 to 200 µm, preferably from 30 to 100 µm, determined without the current collector.

The inventive electrochemical cell further comprises, as well as the inventive cathode and an anode, at least one electrolyte composition comprising at least one solvent and at least one alkali metal salt.

As regards suitable solvents and further additives for nonaqueous liquid electrolytes for lithium-based rechargeable batteries reference is made to the relevant prior art, e.g. Chem Rev. 2004, 104, 4303-4417, in particular table 1 on page 4307, table 2 on page 4308 and table 12 on page 4379.

The solvents of the electrolyte composition can be chosen from a wide range of solvents, in particular from solvents which dissolve alkali metal salts easily. Solvents or solvent systems, which dissolve alkali metal salts, are for example ionic liquids, polar solvents or combinations of apolar solvents combined with polar additives like crown ethers, like 18-crown-6, or cryptands. Examples of polar solvents are polar protic solvents or dipolar aprotic solvents.

Examples of polar protic solvents are water, alcohols like methanol, ethanol or iso-propanol, carbonic acids like acetic acid, ammonia, primary amines or secondary amines. Polar protic solvents can only be used in electrochemical cell comprising an anode, which comprises an alkali metal, if any contact between that anode and the polar protic solvent is strictly precluded by an appropriate separator.

Examples of dipolar aprotic solvents are organic carbonates, esters, ethers, sulfones like DMSO, sulfamides, amides like DMF or DMAc, nitriles like acetonitrile, lactams like NMP, lactones, linear or cyclic peralkylated urea derivatives like TMU or DMPU, fluorinated ether, fluorinated carbamates, fluorinated carbonated or fluorinated esters.

Suitable solvents of the electrolyte composition may be liquid or solid at room temperature and are preferably liquid at room temperature.

In one embodiment of the present invention the inventive electrochemical cell is characterized in that the solvent is a dipolar aprotic solvent.

A suitable solvent is preferably selected from polymers, cyclic or noncyclic ethers, cyclic or noncyclic acetals, cyclic or noncyclic organic carbonates and ionic liquids.

In one embodiment of the present invention the inventive electrochemical cell is characterized in that the solvent is selected from polymers, cyclic or noncyclic ethers, noncyclic or cyclic acetals and cyclic or noncyclic organic carbonates.

Examples of suitable polymers are especially polyalkylene glycols, preferably poly-C₁-Cₐ-alkylene glycols and especially polyethylene glycols. Polyethylene glycols may comprise up to 20 mol% of one or more C₁-C₄-alkylene glycols in copolymerized form. Polyalkylene glycols are preferably doubly methyl- or ethyl-capped polyalkylene glycols.

The molecular weight M_{w} of suitable polyalkylene glycols and especially of suitable polyethylene glycols may be at least 400 g/mol.

The molecular weight M_{w} of suitable polyalkylene glycols and especially of suitable polyethylene glycols may be up to 5 000 000 g/mol, preferably up to 2 000 000 g/mol.

Examples of suitable noncyclic ethers are, for example, diisopropyl ether, di-n-butyl ether, 1,2-dimethoxyethane, 1,2-diethoxyethane, preference being given to 1,2-dimethoxyethane.

Examples of suitable cyclic ethers are tetrahydrofuran and 1,4-dioxane.

Examples of suitable noncyclic acetals are, for example, dimethoxymethane, diethoxymethane, 1,1-dimethoxyethane and 1,1-diethoxyethane.

Examples of suitable cyclic acetals are 1,3-dioxane and especially 1,3-dioxolane.

Examples of suitable noncyclic organic carbonates are dimethyl carbonate, ethyl methyl carbonate and diethyl carbonate.

Examples of suitable cyclic organic carbonates are compounds of the general formulae (X) and (XI) 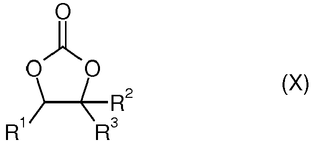 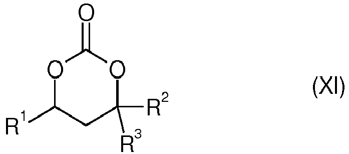 in which R¹, R² and R³ may be the same or different and are each selected from hydrogen and C₁-C₄-alkyl, for example methyl, ethyl, n-propyl, isopropyl, n-butyl, isobutyl, sec-butyl and tert-butyl, where R² and R³ are preferably not both tert-butyl.

In particularly preferred embodiments, R¹ is methyl and R² and R³ are each hydrogen, or R¹, R² and R³ are each hydrogen.

Another preferred cyclic organic carbonate is vinylene carbonate, formula (XII).

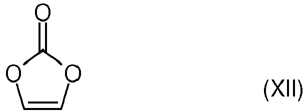

Preference is given to using the solvent(s) in what is called the anhydrous state, i.e. with a water content in the range from 1 ppm to 0.1 % by weight, determinable, for example, by Karl Fischer titration.

Possible alkali metal salts, which are used as conductive salts, have to be soluble in the solvent. Preferred alkali metal salts are lithium salts or sodium salts, in particular lithium salts.

In one embodiment of the present invention the inventive electrochemical cell is characterized in that the alkali metal salt is a lithium salt or sodium salt, preferably a lithium salt.

Suitable alkali metal salts are especially lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄, and salts of the general formula (CₙF₂ₙ₊₁SO₂)ₘXLi, where m is defined as follows:
m = 1 when X is selected from oxygen and sulfur,
m = 2 when X is selected from nitrogen and phosphorus, and
m = 3 when X is selected from carbon and silicon.

Preferred alkali metal salts are selected from LiC(CF₃SO₂)₃, LiN(CF₃SO₂)₂, LiPF₆, LiBF₄, LiClO₄, and particular preference is given to LiPF₆ and LiN(CF₃SO₂)₂.

In one embodiment of the present invention, the concentration of conductive salt in electrolyte is in the range of from 0.01 M to 5 M, preferably 0.5 M to 1.5 M.

In one embodiment of the present invention, inventive electrochemical cells comprise one or more separators by which the electrodes are mechanically separated from one another. Suitable separators are polymer films, especially porous polymer films, which are unreactive toward metallic lithium and toward lithium sulfides and lithium polysulfides. Particularly suitable materials for separators are polyolefins, especially porous polyethylene films and porous polypropylene films.

Polyolefin separators, especially of polyethylene or polypropylene, may have a porosity in the range from 35 to 45%. Suitable pore diameters are, for example, in the range from 30 to 500 nm.

In another embodiment of the present invention, the separators selected may be separators composed of PET nonwovens filled with inorganic particles. Such separators may have a porosity in the range from 40 to 55%. Suitable pore diameters are, for example, in the range from 80 to 750 nm.

In one embodiment of the present invention, inventive electrochemical cells can contain additives such as wetting agents, corrosion inhibitors, or protective agents such as agents to protect any of the electrodes or agents to protect the salt(s).

In one embodiment of the present invention, inventive electrochemical cells can have a disc-like shape. In another embodiment, inventive electrochemical cells can have a prismatic shape.

In one embodiment of the present invention, inventive electrochemical cells can include a housing that can be from steel or aluminium.

In one embodiment of the present invention, inventive electrochemical cells are combined to stacks including electrodes that are laminated.

In one embodiment of the present invention, inventive electrochemical cells are selected from pouch cells.

Inventive electrochemical cells, in particular rechargeable lithium sulfur cells, comprising the inventive electroactive composite (A) have overall advantageous properties. They exhibit good capacity, a low capacity fade rate per cycle, and good cycling stability on extended cycling.

A further aspect of the present invention refers to batteries, in particular to rechargeable lithium sulfur batteries, comprising at least one inventive electrochemical cell, for example two or more. Inventive electrochemical cells can be combined with one another in inventive batteries, for example in series connection or in parallel connection. Series connection is preferred.

Inventive batteries, in particular rechargeable lithium sulfur batteries, have advantageous properties. They exhibit good capacity, a low capacity fade rate per cycle, and good cycling stability on extended cycling.

The inventive electrochemical cells or inventive batteries can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of the present invention is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present invention is the use of the electrochemical cell as described above in motor vehicles, bicycles operated by electric motor, aircraft, ships or stationary energy stores.

The use of inventive electrochemical cells in devices gives the advantage of prolonged run time before recharging and a smaller loss of capacity in the course of prolonged run time. If the intention were to achieve an equal run time with electrochemical cells with lower energy density, a higher weight for electrochemical cells would have to be accepted.

The present invention further provides a device comprising at least one inventive electrochemical cell as described above. Preferred are mobile devices such as vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated by the examples which follow, but these do not restrict the invention.

Figures in percent are each based on % by weight, unless explicitly stated otherwise.

### I. Synthesis of electroactive composites

### I.1 Synthesis of hollow microspheres of a vanadium oxide

### I.1.a Synthesis of VO₂ hollow spheres A2-1

VO₂ hollow spheres were prepared through a solvothermal reaction, by firstly dissolving 1.2 g V₂O₅ and H₂C₂O₄.2H₂O in a molar ratio 1:3 in 40 ml of deionized water, stirring at 80 °C during 2 hours. The thus obtained VOC₂O₄ solution was mixed with 2-propanol (1:10 volume ratio) and stirred for 20 min. The mixture was then sealed either in a microwave vessel, heated at 200 °C for 4 hours, 150 W, 19 bar in a Discover-SP microwave or in a steel autoclave and heated at 200 °C for 12 hours. The precipitate was collected by centrifugation and washed 3 times with absolute ethanol.

### I.1.b Synthesis of W-doped VO₂ hollow spheres A2-2

For the preparation of W-doped VO₂ hollow spheres, 1.2 g V₂O₅ and H₂C₂O₄.2H₂O in a molar ratio 1:3 were dissolved in 40 ml of deionized water. To this mixture 3 atom% ammonium tungstate were added, and then stirred at 80 °C during 2 hours. The obtained VOC₂O₄ solution was mixed with 2-propanol (1:10 volume ratio) and stirred for 20 min. The mixture was then sealed either in a microwave vessel, heated at 200 °C for 4 hours, 150 W, 19 bar in a Discover-SP microwave or in a steel autoclave and heated at 200 °C for 12 hours. The precipitate was collected by centrifugation and washed 3 times with absolute ethanol.

### I.1.c Synthesis of V₂O₅ hollow spheres A2-3

After the solvothermal synthesis I.1.a, the obtained hollow spheres A2-1 were calcinated in air at 350 °C for 2 h with heating rate of 1 °C min in order to obtain hollow spheres A2-3.

### I.1.d Synthesis of calcined W-doped VO₂ hollow spheres A2-4

After the solvothermal synthesis I.1.b, the obtained material A2-2 was calcinated under inert atmosphere at 350 °C for 2 h with heating rate of 1 °C min in order to obtain calcined hollow spheres A2-4.

### I.2 Synthesis of electroactive composites comprising an electroactive sulfur-containing material and hollow microspheres of a vanadium oxide

### I.2.a Synthesis of a sulfur-V₂O₅ hollow spheres composite A-1

Composite A-1 was obtained by sulfur infiltration on the vanadium hollow spheres A2-3. The infiltration was performed by mixing V₂O₅ hollow spheres (A2-3) with sulfur and heating the mixture at 155 °C for melt diffusion. The sulfur content was determined by TGA as 80 wt.-%.

### I.2.b Synthesis of a sulfur- calcined W-doped VO₂ hollow spheres composite A-2

Composite A-2 was obtained by sulfur infiltration on the vanadium hollow spheres A2-4. The infiltration was performed by mixing calcined W-doped VO₂ hollow spheres (A2-4) with sulfur and heating the mixture at 155 °C for melt diffusion. The sulfur content was determined by TGA as 80 wt.-%.

### II. Production of cathodes

### II.1 Production of comparative cathodes CC.1 from sulfur

Bare sulfur cathodes were prepared by a mixture of carbon blacks (Super C65 and Printex XE2), sulfur (Aldrich, reagent grade) and polyvinyl alcohol (Selvol 425, Sekisui) in a ratio 35 : 60 : 5 by weight in a mixture of water, 2-propanol and 1-methoxy-2-propanol (liquid mixture-LM, 65 : 30 : 5 by weight). The resulting mixture was ball milled for 20 h to form a homogeneous slurry which was then coated by doctor blade onto a 8 µm thick carbon coated aluminum foil and dried in vacuum at 40 °C during 16 h. The sulfur content in the final electrode was 60 wt.-% and the sulfur loading was 2.0 mg of sulfur/cm².

### II.2 Production of cathodes C.2 from A-1

Vanadium-sulfur composite cathodes (C.2) were prepared in a similar way to the bare sulfur cathodes (CC.1); using A-1. Aiming for a final sulfur content of 60 wt.-% on the cathodes, a mixture of carbon blacks (Super C65 and Printex XE2), vanadium-sulfur composite (A-1) and polyvinyl alcohol (Selvol 425, Sekisui) in a ratio 20 : 75 : 5 by weight in a mixture of water, 2-propanol and 1-methoxy-2-propanol (liquid mixture-LM, 65 : 30 : 5 by weight). The resulting mixture was ball milled for 20h to form a homogeneous slurry which was then coated by doctor blade onto a 8 µm thick carbon coated aluminum foil and dried in vacuum at 40 °C during 16 h. The final sulfur loading on the vanadium-sulfur composite cathodes was 2.5 mg of sulfur/cm².

### 11.3 Production of cathodes C.3 from A-2

W-doped vanadium-sulfur composite cathodes (C.3) were prepared in a similar way to the bare sulfur cathodes (CC.1); using A-2. Aiming for a final sulfur content of 60 wt.-% on the cathodes, a mixture of carbon blacks (Super C65 and Printex XE2), W-doped vanadium-sulfur composite (A-2) and polyvinyl alcohol (Selvol 425, Sekisui) in a ratio 20 : 75 : 5 by weight in a mixture of water, 2-propanol and 1-methoxy-2-propanol (liquid mixture-LM, 65 : 30 : 5 by weight). The resulting mixture was ball milled for 20 h to form a homogeneous slurry which was then coated by doctor blade onto a 8 µm thick carbon coated aluminum foil and dried in vacuum at 40 °C during 16 h. The final sulfur loading on the vanadium-sulfur composite cathodes was 2.5 mg of S/cm².

### I II. Testing of the cathodes in electrochemical cells

The electrochemical tests were done using coin-type cells. The cells were assembled in an argon-filled glove box using lithium foil as the counter electrode and a porous monolayer polyethylene membrane (thickness: 20 µm; porosity: 45%) as separator. The electrolyte used was a solution of lithium bis(tri-fluoromethanesulfonyl)imide, LiNO₃ in 1,2-dimethoxyethane and 1,3-dioxolane (8 : 4 : 44 : 44 by weight). Galvanostatic charge-discharge cycling were carried out using a Maccor battery tester in the potential range of 1.7-2.5 V (vs Li⁺/Li) at a current density of 0.02 C rate for the first cycle and 0.2 C discharge rate and 0.125 C charge rate for the subsequent cycles at controlled 25 °C. The sulfur to electrolyte ratio was 1:7 for the cells with the vanadium-sulfur composite and 1:10 for the cells with bare sulfur.

The resulting test data of the electrochemical cells are summarized in Table 1 and Table 2.

**Table 1: Inventive electrodes comprising vanadium-sulfur composite cathodes (C.2 and C.3)**

| Cycle | Discharge capacity [mAh/gs] | |
|---|---|---|
| | C.2 | C.3 |
| 1 | 1338 | 1460 |
| 2 | 954 | 932 |
| 10 | 972 | 886 |
| 100 | 965 | 808 |
| 200 | 863 | 653 |
| 300 | 818 | 455 |
| 400 | 702 | 292 |
| 500 | 520 | 222 |

**Table 2: Comparison of discharge capacity between inventive electrode (C.2) and comparative bare sulfur electrode (CC.1)**

| Cycle | Discharge capacity [mAh/gs] | |
|---|---|---|
| | C.2 | CC.1 |
| 1 | 1338 | 1456 |
| 2 | 954 | 860 |
| 10 | 972 | 761 |
| 100 | 965 | 736 |
| 200 | 863 | 765 |
| 300 | 818 | 378 |
| 400 | 702 | 295 |
| 500 | 520 | 221 |

## Claims

1. An electroactive composite for an electrochemical cell comprising
(A1) an electroactive sulfur-containing material, and
(A2) hollow microspheres of a vanadium oxide.

2. The electroactive composite according to claim 1, wherein the electroactive sulfur containing material (A1) is elemental sulfur.

3. The electroactive composite according to claim 1 or 2, wherein the vanadium oxide is selected from VO₂ and V₂O₅, and wherein the vanadium oxide is doped with tungsten, wherein the atomic ratio of tungsten to vanadium is in the range from 0.005 to 0.10.

4. The electroactive composite according to any of claims 1 to 3, wherein the electroactive composite comprises core-shell particles, wherein the core of said particles comprises the electroactive sulfur-containing material, and wherein the shell of said particles comprises the vanadium oxide.

5. The electroactive composite according to any of claims 1 to 4, wherein the average diameter of the hollow microspheres is in the range from 0.1 µm to 10 µm.

6. The electroactive composite according to any of claims 1 to 5, wherein the mass fraction of electroactive sulfur-containing material is in the range from 0.2 up to 0.95 and the mass fraction of hollow microspheres of a vanadium oxide is in the range from 0.05 up to 0.8.

7. A cathode material for an electrochemical cell comprising
(A) an electroactive composite according to any of claims 1 to 6,
(B) optionally carbon in a polymorph comprising at least 60% sp²-hybridized carbon atoms, and
(C) optionally at least one polymer as a binder.

8. A cathode which has been produced from or using a cathode material according to claim 7.

9. An electrochemical cell comprising at least one cathode according to claim 8.

10. A battery comprising at least one electrochemical cell according to claim 9.

11. A device comprising at least one electrochemical cell according to claim 9.

12. A process for preparing an electroactive composite for an electrochemical cell comprising
(A1) an electroactive sulfur-containing material, and
(A2) hollow microspheres of a vanadium oxide,
according to any of claims 1 to 6, comprising the process step of
(a) loading the electroactive sulfur-containing material (A1) into the hollow microspheres of a vanadium oxide (A2).

13. The process according to claim 12, wherein process step (a) comprises a heat treatment at a temperature in the range from 120 to 180°C.

14. The use of hollow microspheres of a vanadium oxide as a component for the preparation of an electroactive composite for an electrochemical cell comprising an electroactive sulfur containing material.
